# EUROPEAN PATENT APPLICATION

(11) **EP 1 445 695 A1**
(43) Date of publication of application: **11.08.2004**
(21) Application number: 02775508.1
(22) Date of filing: 07.11.2002
(51) Int. Cl.: G06F 9/45

(54) **JIT COMPILER−EQUIPPED VIRTUAL COMPUTER, OPERATION METHOD THEREOF, AND TERMINAL APPARATUS HAVING THE VIRTUAL COMPUTER**

(30) Priority: 07.11.2001 JP 2001341577
(71) Applicant: FUJITSU LIMITED, Kawasaki-shi, Kanagawa 211-8588 (JP)
(72) Inventor: SHIMURA, Kouya, c/o FUJITSU LIMITED, Kawasaki-shi, Kanagawa 211-8588 (JP)
(74) Representative: Sunderland, James Harry
(86) International application number: PCT/JP2002/011599
(87) International publication number: WO 2003/040918

(57) **Abstract**

A virtual computer having a JIT compiler with a bytecode storing area, a unit to execute bytecodes by interpreting the bytecodes in order, a compiler to compile bytecodes to native codes that the virtual computer executes, a native code area and a search table storing tag information generated from an address of the bytecodes and addresses of compiled native codes in the native code area.

## Description

### BACKGROUND OF THE INVENTION

### 1. Technical Field

The present invention relates to a virtual computer comprising a Just-In-Time, or JIT compiler. The virtual computer of the present invention is suitable for a portable wireless communication apparatus such as a terminal apparatus, a cellular phone, or a personal digital assistant (PDA) having wireless communication function.

### 2. Background of the Art

The widespread use of the internet makes it practical to have a system to run programs that are available via the internet. Use of the Java language, for example, is common for programs meant for cellular phones.

The Java language is distributed for programs executed on a virtual computer which can be used on every platform, and the program is called "bytecode." The Java language, however, cannot be executed directly by processors of portable wireless communication apparatus. Instead, such devices execute the bytecode by using emulation techniques.

The present invention relates to a virtual computer comprising a Just-in-Time, or JIT, compiler. The virtual computer of the Java language of the present invention can run bytecode with high speed, making it suitable for use with portable wireless communication apparatus with small memory capacity, such as cellular phones, PDAs, and the like.

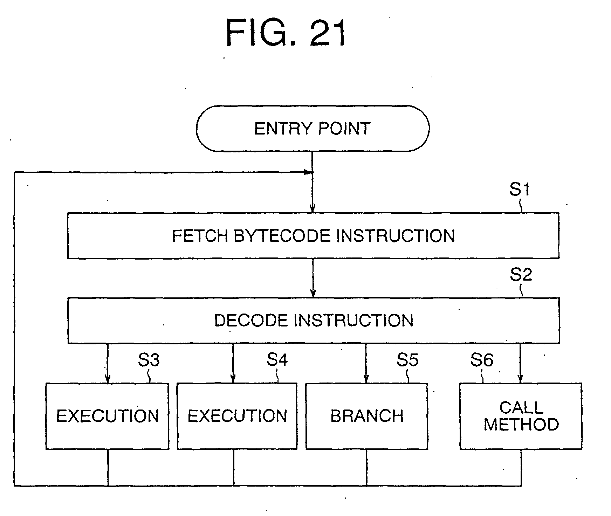

Prior art of the present invention will be explained referring to Figs. 21-24.

Fig.21 shows a flowchart of the interpreter, which interprets and executes the bytecode on the virtual computer. The boxes labeled S1-S6 shows processing steps.

An interpreter system that interprets and subsequently executes bytecodes by software is used to execute bytecodes on a virtual computer. The running speed of this process by the interpreter system, however, is low, because of the step-by-step execution of instructions. The embodiment of the prior art process is as follows.

The instruction of bytecode is fetched (S1), and the fetched instruction is decoded (S2). When the decoded result of the instruction is an "execution" of instruction, the instruction is executed (S3,S4), and the process goes back to step S1. When the decoded result of the instruction is "branch" (S5), the branch process is executed and the the process goes back to step S1. When the decoded instruction is "call-method" (S6), the calling method is executed (S6) and the step goes to the process of S1. Each subsequent instruction is processed in the same way.

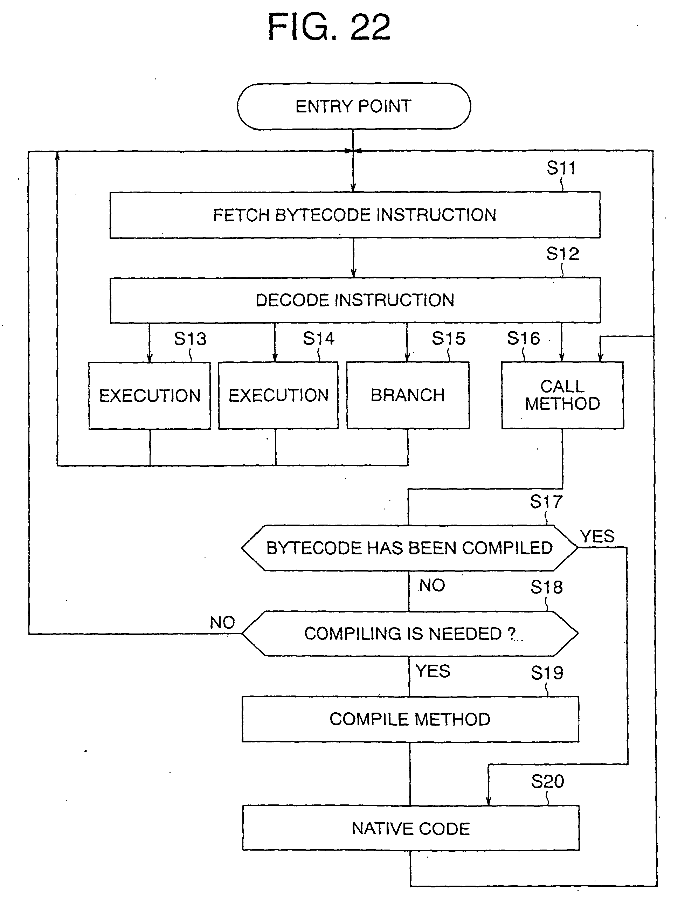

The prior art JIT compiler that is generally used will be explained referring to Fig. 22.

Fig. 22 shows a flowchart of the process, combining the interpreter and the JIT compiler. The combination process of the interpreter and the JIT compiler that is used generally only in personal computers will be explained based on Fig.22. This JIT compiler has never been used in cellular phones. Steps S11- S20 are the process steps. Of these steps, steps S11-S16 show the process of the interpreter and steps S17-S20 show the process of the JIT compiler.

The JIT compiler is generally used to resolve the problem of the low running speed of the interpreter process. The JIT compiler compiles the bytecode into native code. This native machine code can be executed on the underlying platform, thus allowing the program to run with high speed.

The JIT compiler takes a downloaded program, which has methods to execute, and compiles a whole of bytecodes of the methods into native machine codes. The compiled native codes are stored in memory (-storing area for program-), and are then used when the program is executed. The first execution does incur overhead time, but subsequent executions occur with high speed, without the overhead. The embodiment of the process is asfollows.

The instruction of the bytecode is fetched (S11), and the fetched instruction is decoded (S12). When the decoded result is "execution", the instruction is executed (S13, S14) and the process goes back to step S11. When the decoded instruction is "branch", the branch process is executed (S 15), and the process goes back to step S11. When the decoded instruction is "call method", the calling method is executed (S16) and goes to the next step to decide whether or not the bytecode has been compiled (S17).

When the bytecode has not been compiled, the next step is to decide whether the bytecode needs to be compiled (S18). When compiling is not needed, the process goes back to step S11. Alternatively, when the bytecode needs to be compiled, the bytecodes called by the method are compiled with the JIT compiler to produce native codes, and the native codes are stored in the native code storing area (S19). Further, the native codes are executed (S20). In execution of the process, when a method is called, the process goes to step S16, and the method is implemented, the process returns to step S11. In the process, when compiling is implemented by the decision at step S17, the process goes to step S20. The above-mentioned process will be continued to address each instruction.

The above-mentioned bytecode refers to the machine code of the Java virtual machine (virtual computer) that is the binary form of the Java application created by Sun Microsystems (Santa Clara, CA, USA). The "JIT (Just-In-Time) compiler-" is software that transforms bytecode into native code that a computer executes directly. The "method" is a program (or subroutine) that defines the execution method of an object in object oriented programming.

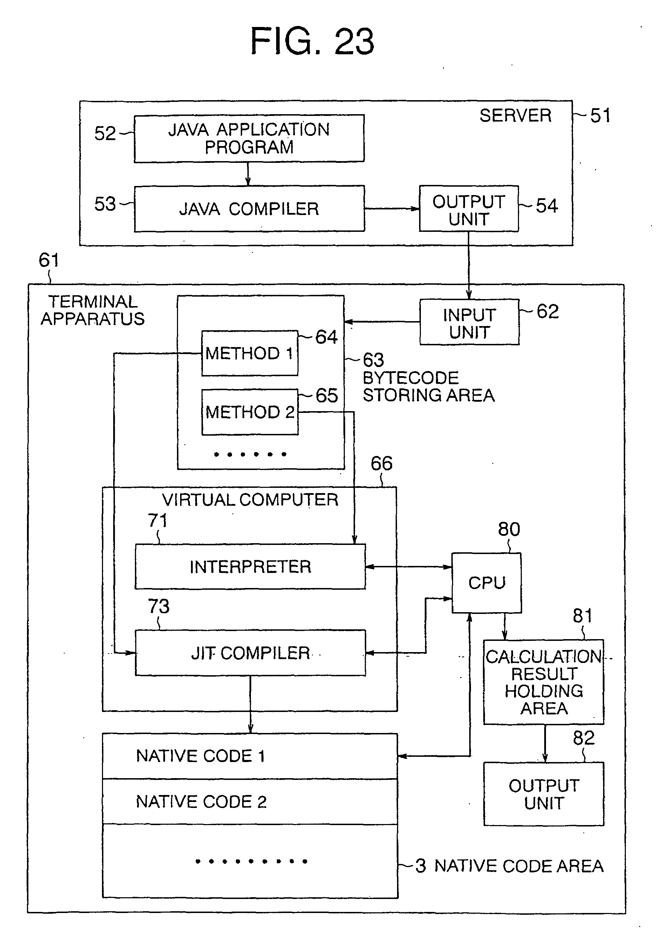

Fig. 23 shows prior art terminal apparatus loading the virtual computer.

In Fig. 23 a server 51 comprises JAVA application program 52 and JAVA compiler 53 which compiles the JAVA application program, and an output unit 54 that outputs bytecodes compiled by the JAVA compiler on a network.

In the terminal apparatus 61, an input unit 62 inputs bytecodes sent from the server 51. A bytecode storing area 63 in memory stores the input bytecode. Methods 64 and 65 are methods compiled to the bytecode by the JAVA compiler 53. A virtual computer 66 comprises an interpreter 71, a JIT compiler 73 and a native code area 3, which is a memory area storing the native code compiled by the JIT compiler. The terminal apparatus comprises CPU 80, calculation result holding area 81 holds the calculation result in memory, and an output unit 82 outputs the calculation results.

In Fig. 23, the bytecodes sent from the server 51 are input through the input unit 62 and stored in the byte code storing area 63, with bytecode addresses. The interpreter 71 interprets and executes the bytecodes. When the decoded result is method 1 64, the JIT compiler 73 inputs the bytecode instruction from the bytecode storing area and compiles the bytecode. The compiled bytecodes are stored at native code addresses in the native code storing area 3.

The calculated result of CPU 81 is held in the calculation result holding area 81 of memory, and output through the output unit 82.

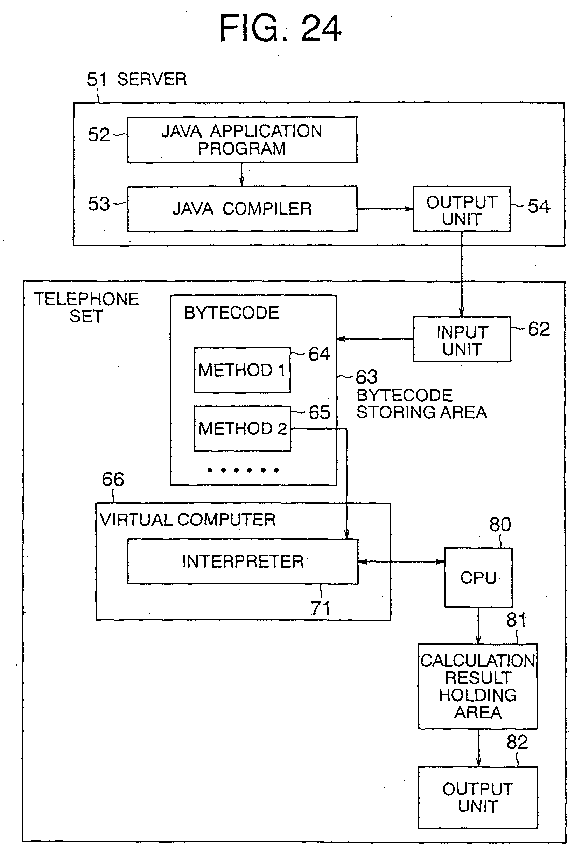

A telephone set loading prior art virtual computer is shown in Fig. 24.

In Figs. 23 and 24, the same numerals denote the same units. In the construction of Fig.24, the bytecodes sent from the server 51 are input through the input unit 62 and stored in the byte code storing area 63 with byte code address. The interpreter 71 interprets each instruction in order of the input bytecode, and CPU 80 calculates the decoded bytecodes. The calculated result of CPU 80 is held in memory in the calculation result holding area 81, and output through the output unit 82.

The above-mentioned prior art virtual computer has several disadvantages.

Memory capacity used in portable wireless communication apparatuses such as cellular phones and PDAs, etc. are limited, so all compiled codes cannot be stored in the memory. Moreover, many of the applications executed in the portable wireless communication apparatuses are interactive software, such as game software, that requires high response speed. Because of this, long compiling time is not acceptable for portable wireless communication apparatuses.

High performance processors are generally not used in portable radio apparatus. When using the prior art JIT compiler with this apparatus, interruptions occur, for example in game play, while using the softeware. Moreover, for any bytecode executed only one time, the execution speed is retarded by the overhead time of the compiling, and because of the overhead, when compiling a large program, the execution speed is lower than execution speed performed by interpreter.

Objects of the present invention are to resolve the above-mentioned problems, and improve processing speed and response characteristics of the portable wireless apparatus having limited memory capacity.

### DISCLOSURE OF THE INVENTION

The present invention comprises constructions that follow.
(i) A virtual computer realized in memory comprises a bytecode storing area, a unit to execute bytecodes by interpreting the bytecodes in order, a compiler to compile bytecodes to native codes that the virtual computer executes, and a native code storing area. Further the virtual computer comprises a search table, storing tag information generated from the addresses of the bytecodes and addresses of native codes in the native code area.
(ii) A method of the compiling of a virtual computer realized in memory
   comprises a storing bytecodes in a bytecode storing area, executing bytecodes by interpreting the bytecodes in order, compiling bytecodes to native codes that the virtual computer executes, storing tag information generated from the addresses of the bytecodes and addresses of the native codes in the native code area in a search table, and deciding that compiling of the byte code is needed or not by searching the search table.
(iii) A terminal apparatus including a virtual computer realized in memory comprises a bytecode storing area, a unit to execute bytecodes by interpreting the bytecodes in order, a compiler to compile bytecodes to native codes that the virtual computer executes, and a native code storing area. Further, the virtual computer comprises a search table that stores the information for deciding whether or not compiling is implemented, and the addresses of the compiled native codes.

Thus, the present invention easily decides whether or not compiling is required, and the search of the stored addresses of native codes is easily performed in the cases where compiling has been implemented. Furthermore, only the frequently used parts of methods are compiled and held. Thus, in the present invention, compiling can be executed in a device with small memory capacity. Further, even if the JIT compiler of the present invention is used in a portable terminal apparatus that limits memory for generating and holding the native codes, the processing speed is high because of the ability to compile with small memory capacity.

### BRIEF EXPLANATION OF DRAWINGS

Fig. 1 shows a block diagram of the construction of the virtual computer of the present invention.
Fig. 2 shows a flowchart of the first embodiment of the present invention.
Fig. 3 shows a flowchart of the second example of second embodiment of the present invention.
Fig. 4 shows a diagram depicting the action of the first embodiment of the present invention.
Fig. 5 shows a diagram depicting the action of the second embodiment of the present invention.
Fig. 6 shows a flowchart of the second embodiment of the present invention.
Fig. 7A shows a diagram depicting the first access action of the third embodiment of the present invention.
Fig. 7 B shows a diagram depicting the second access action of the third embodiment of the present invention.
Fig. 8 shows a flowchart of the third embodiment of the present invention.
Fig. 9 shows a diagram depicting the action of the forth embodiment of the present invention.
Fig. 10A shows a diagram of the construction of an execution control unit of the fifth embodiment of the present invention
Fig. 10B shows a flowchart of the execution control unit of the fifth embodiment of the present invention
Fig. 11A shows a diagram of construction of an execution control unit of the sixth embodiment of the present invention.
Fig. 11B shows a flowchart of the execution control unit of the sixth embodiment of the present.
Fig. 12A shows a diagram of construction of an execution control unit of the seventh embodiment of the present.
Fig. 12B shows a flowchart of the execution control unit of the seventh embodiment of the present invention.
Fig. 13A shows a diagram of construction of an execution control unit of the eighth embodiment of the present invention.
Fig. 13B shows a flowchart of the execution control unit of the eighth embodiment of the present invention and of the execution control unit.
Fig. 14 shows a diagram depicting a ninth embodiment of the present invention.
Fig. 15 shows a flowchart of the ninth embodiment.
Fig. 16 shows a diagram depicting the action of a tenth embodiment.
Fig. 17 shows a flowchart of the tenth embodiment.
Fig. 18A shows a diagram depicting a relocation unit of an eleventh embodiment.
Fig. 18B shows a flowchart of the relocation unit of the eleventh embodiment.
Fig. 19A shows a diagram to explain a relation between a search table and a native code area of the present invention.
Fig. 19B shows a diagram to explain the other relation between a search table and a native code area of the present invention.
Fig. 20 shows a diagram of a cellular phone that comprises the virtual computer of the twelfth embodiment of the present invention.
Fig. 21 shows a flowchart of a prior art interpreter.
Fig. 22 shows a flowchart of another prior art that an interpreter and a JIT compiler are used with combined.
Fig. 23 shows a diagram of a terminal apparatus comprising prior art virtual computer.
Fig. 24 shows a diagram of a cellular phone comprising prior art virtual computer.

### BEST MODE FOR CARRYING OUT THE INVENTION

Referring to the drawings, the embodiments of the present invention will be explained. The virtual computer explained below is virtually realized with software programs and a processor (CPU or MPU) in a portable radio communication apparatus which executes the program.

Thus, all processes of the flowcharts explained below are executed by the software program. The memory, the code cache and the search table, etc. in the virtual computer are realized in the software program.

### Explanation of the First Embodiment

The first embodiment of the present invention interprets and executes the bytecode of the virtual computer with software. Further, the virtual computer comprises a code cache, which is a limited area in the memory to store the native codes. The virtual computer also comprises a JIT compiler. When executing the bytecodes, the JIT compiler compiles the bytecode to the native code, which the virtual computer can execute directly, and stores the native codes in the code cache. Further, the virtual computer comprises a search table holding the information that determines whether or not compiling is implemented using the bytecode address, which will be explained later. The addresses of the compiled native codes can be found by retrieving the search table.

Free space for storing the native code does not exist in the native code area when the bytecode is compiled. Any compiled native codes are cancelled to make some free spaces in the native code area. The search table can be updated in this manner.

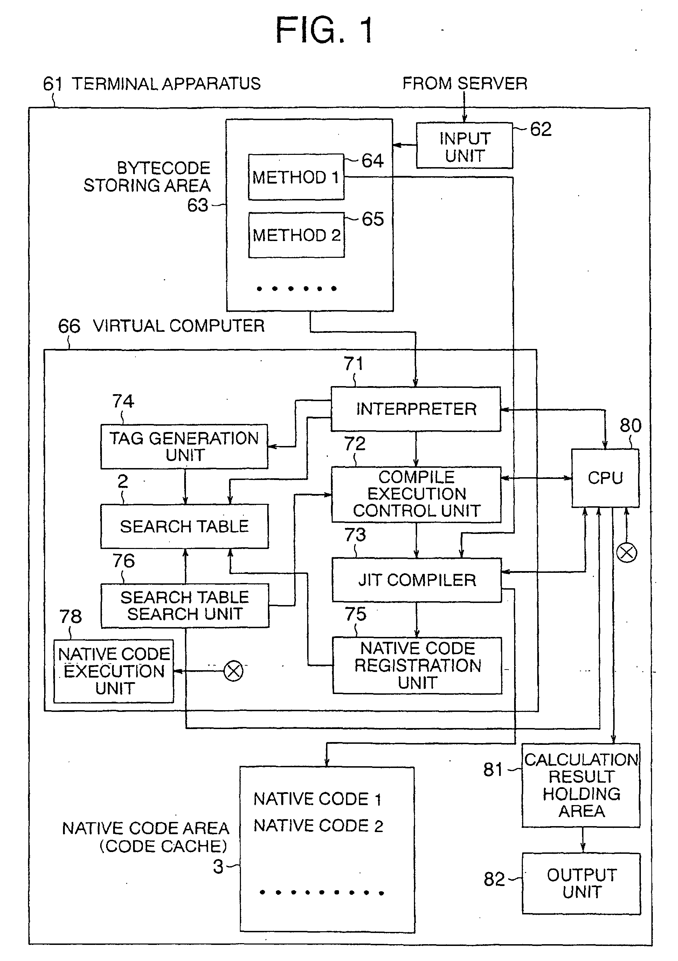

Fig. 1 shows a terminal apparatus comprising the virtual computer of the present invention. The terminal apparatus 61 comprises a search table 2, and a native code area 3 in memory area to store the native code. Further, the terminal apparatus 61 comprises an input unit 62 to input the bytecodes sent from a server 51, a byte code storing area 63 to store the input bytecodes in memory, and methods 64 and 65 to be compiled.

The virtual computer 66 comprises an interpreter 71 and a compile execution control unit 72. The compile execution control unit 72 finds whether there is a need to compile from the search result for the search table unit 76. Moreover, the compile execution control unit 72 decides compiling portions. For example, it finds portions inevitably executed or portions of instructions frequently used for compiling, or a portion for compiling of a fixed number of instructions or a portion for compiling for a fixed time. The virtual computer 66 further comprises the JIT compiler 73, a CPU 80, a calculation result holding area 81 to hold the calculation result in memory, and an output unit 82 outputting the execution result.

The virtual computer 66 further comprises a tag generation unit 74 to generate tags in the search table 2 and writes the bytecode address of the native code area 3 in the tag, a JIT compiler 73 to generate the native code, and a native code registering unit 75 to register the address of native code of the native code area in a tag corresponding to the bytecode in the search table. The search table search unit 76 searches the search table 2 and decides whether or not the bytecode is compiled and registered in the native code storing area. The native code execution unit 78 executes the native codes stored in the native code area 3 according to the search result of the search table search unit 76.

In Fig. 1, the tag generation unit 74 generates a tag that points to a bytecode in a process sequence of the interpreter 71. Alternatively, the tag is generated for every bytecode. The JIT compiler compiles bytecodes to generate native codes. The native code registration unit 75 registers the native code addresses in the tag corresponding to the bytecodes. The search table search unit 76 searches the tag of the bytecode to be processed in the search table 2. When the search table search unit finds that the native code corresponding to the bytecode is registered, that is considered a "hit", and the native code execution unit 78 executes the bytecode by using the native code.

The bytecodes sent from the server 51 are input through the input unit 62, and stored at their bytecode addresses in the bytecode storing area 63. The interpreter 71 interprets and executes bytecodes. When the decoded bytecode is a method and the search result of the search table searching unit 76 shows that the native code has been compiled, that is a "hit", and the native code execution unit 78 executes the bytecode by using the native code. When the search result of searching the search table by the search table search unit 76 is that the native code is not compiled, that is a "miss", and the compile execution control unit 72 directs the JIT compiler to compile a portion of the instruction or method etc. The JIT compiler 73 compiles a portion of the instruction, etc. The native code compiled by the JIT compiler is stored at the native code address in the native code storage area 3. Further, the native code registration unit 75 registers the native code address corresponding to the tag of the compiled bytecode. The search table 2 only registers the first instruction of the block of a compiling sequence.

The calculation result of CPU 80 is held in the calculation result holding area 81 and output through the output unit 82.

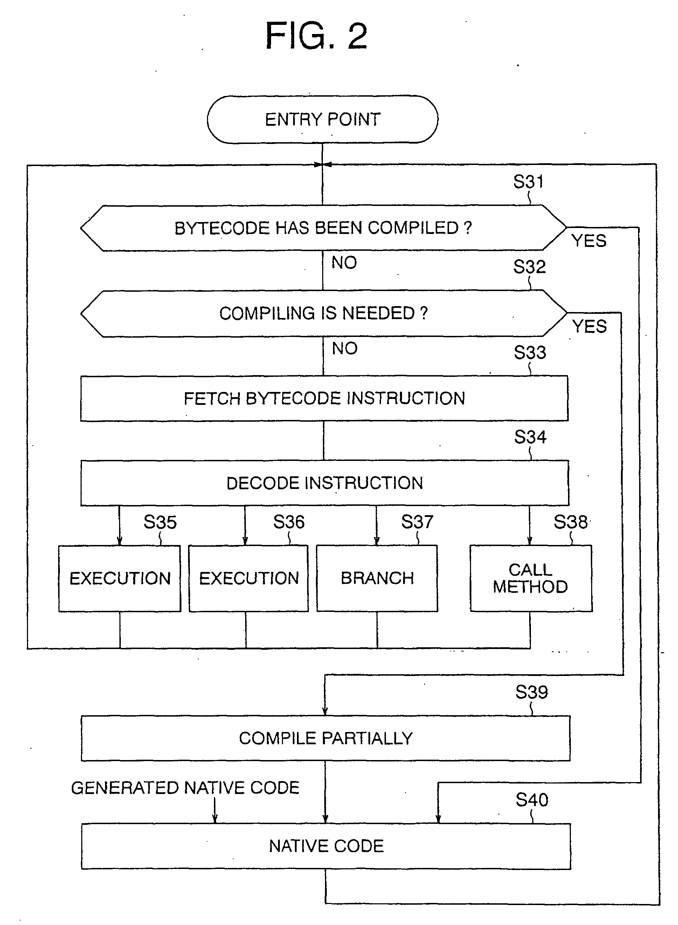

Fig. 2 shows the first example of a flowchart of the virtual computer of the present invention. Referring to Fig. 2, the first embodiment of the present invention will be explained. The flowchart illustrates the process executed by the virtual computer in checking whether or not the bytecodes have been compiled. For all byte codes, whether or not compiling should be implemented is checked by using the tag information in the search table (S31). When the bytecode has not yet been compiled, it is determined whether or not compiling is needed (S32). When compiling is not needed, the bytecode instruction is fetched (S33), and the bytecode instruction is decoded (S34).

When the result is "execution" (S35, 36), the instruction is executed, and the process returns to step 31. When the result is "branch" (S37), the instruction is executed, and the process returns to step 31. When the result is "call method" (S38), the instruction is executed, and the process returns to step 31.

When the decision of step S32 is that compiling is required, a portion of the bytecodes are compiled to generate native codes and the native codes are stored in the native code storage area (S39). Further the native codes are executed (S40), and the process returns to step S31. Alternatively, when the bytecode has been compiled in the process of step 31, the process goes to step 40. In the above-mentioned processes, the processes of S31 - S 38 are executed by the interpreter 71, and the processes of S 39 and S40 are executed by the JIT compiler 73.

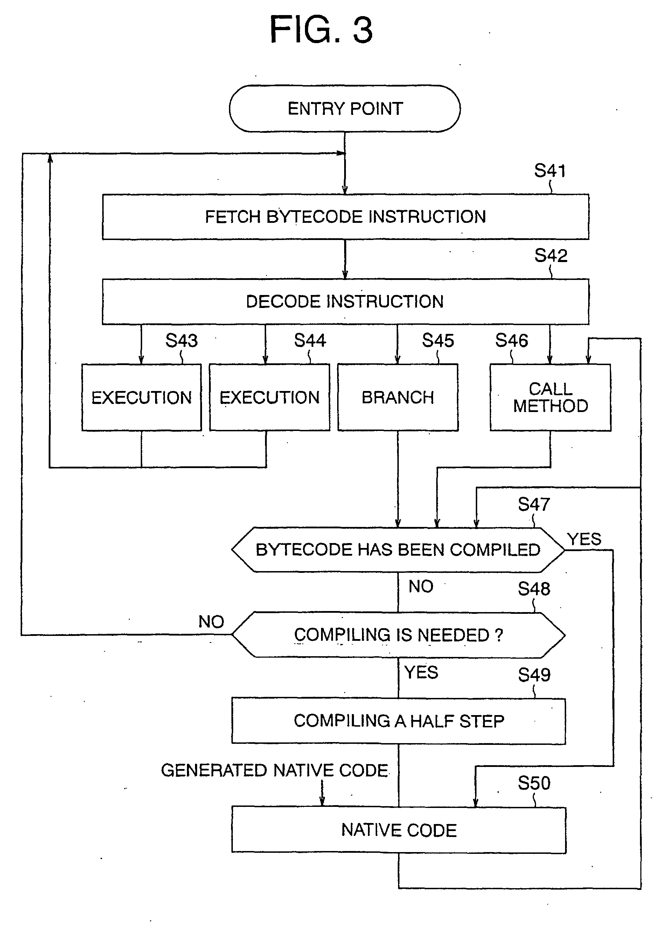

Fig. 3 shows a flowchart of a second example of the first embodiment of the present invention. Referring to Fig. 3, the second example of the first embodiment of the present invention is explained.

The process of the second example is that the necessity of compiling is decided at a pause of the execution control, for example when executing branch or method, etc. The second example is characterized in that compiling is not executed by a whole method unit, but interrupted by some conditions which will be explained later in the fifth, sixth, seventh and eighth embodiment of the present invention. That is, the present invention is different from the general JIT compiler.

In Fig. 3, a byte code instruction is fetched (S41) and the instruction is decoded (S42). When the decoded result is "execution" (S43, S44), the instruction is executed and the process returns to step S41. When the decoded result is "branch" (S45), the branch process is executed, and when the instruction is "call method" (S46), the calling method is executed.

Further, when branch or calling method is executed in the above-mentioned steps, it is decided whether or not the bytecode has been compiled (S47). If the bytecode has not been compiled, the next step determines whether or compiling of the bytecode is necessary (S48). If the result of this step is that compiling of the bytecode is not needed, the process returns to step S41.

Alternatively, when compiling is necessary, compiling in part is executed to generate native codes, and the generated native codes are stored in the native code storage area (S49). The native codes are executed (S50), and the step returns to step S46 or S47.

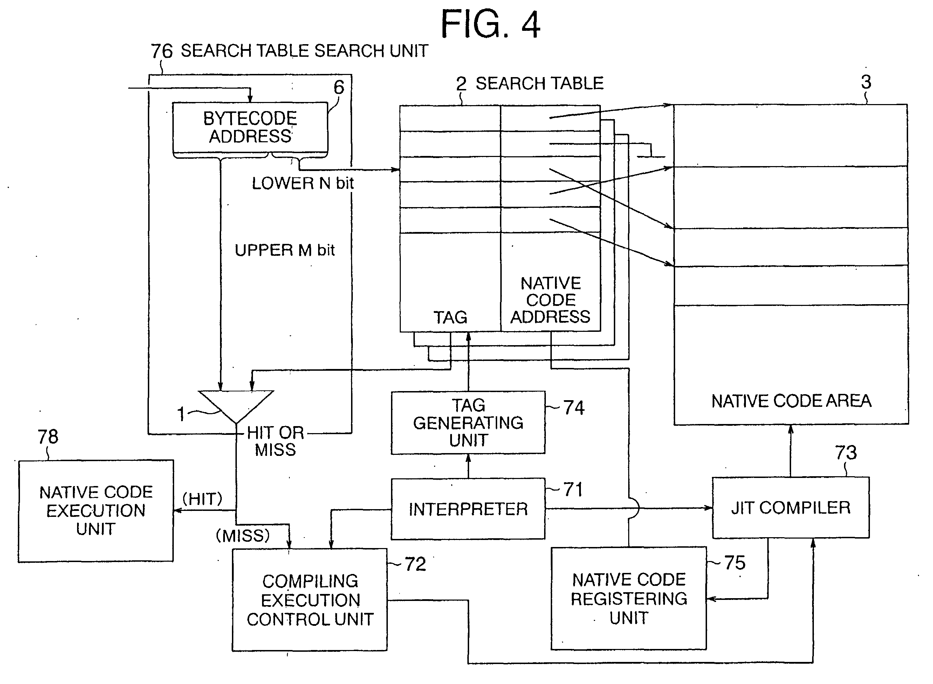

Fig. 4 shows a block diagram of the virtual computer of the first embodiment of the present invention. In Fig. 4, a comparator 1, a search table 2, a native code area 3, an interpreter 71, a compiling execution control unit 72, a JIT compiler 73, a tag generating unit 74, a native code registering unit 75, a search table search unit 76 and a native code execution unit 78 are shown.

The native code area 3 of the present invention acts as cache memory with the search table 2, the tag generating unit 74, the native code registering unit 75 and the search table searching unit 76. In the explanation in that follows, the code cache corresponds to the native code area 3.

In Fig. 4, the search table 2 is used to determine whether or not the bytecode has been compiled. The search table 2 registers the correspondence between a tag and a native code address, that is the address of the native code area in the cache. Thus, the data of the native code area 3 in the cache can be retrieved by the native code address.

The address of bytecode is composed of an upper M bit and a lower N bit. The native code address can be found from the lower N bit of the bytecode address by search in the search table. The upper M bit of the bytecode and the tag information are input into the comparator 1. The comparator 1 automatically compares to find the match or mismatch of the information. When the search result is a match or "hit," the native code execution unit 78 executes the instruction with the native code stored in the native code area.

When the result of the comparison is match or hit, the comparator 1 outputs a match signal, indicating that the bytecode has been compiled.

The first embodiment of the present invention is characterized in the following features. Whether or not the bytecode has been compiled is easily determined by searching the search table. Moreover, in the case where the bytecode is compiled, finding the native code address, that is the address of the native code area 3 in the cache, corresponding to the bytecode is easy. The running speed of a program is quick with the compiled bytecodes and stored native codes. The memory necessary for storing the native codes generated by the JIT compiler is limited, thus the program can be run with high speed, even with small memory capacity.

### Explanation of the Second Embodiment

The second embodiment of the present invention is that the search table 2 or the code cache 3 comprises a counter for counting the number of times instructions are executed. When executing the bytecode of virtual computer, in the case where the counter value of the execution counter is less than a predetermined value, the interpreter executes the instruction. Alternatively, in the case where the counter value is equal to or greater than the predetermined value, that the bytecode is frequently executed, the bytecode is compiled by the JIT compiler and executed.

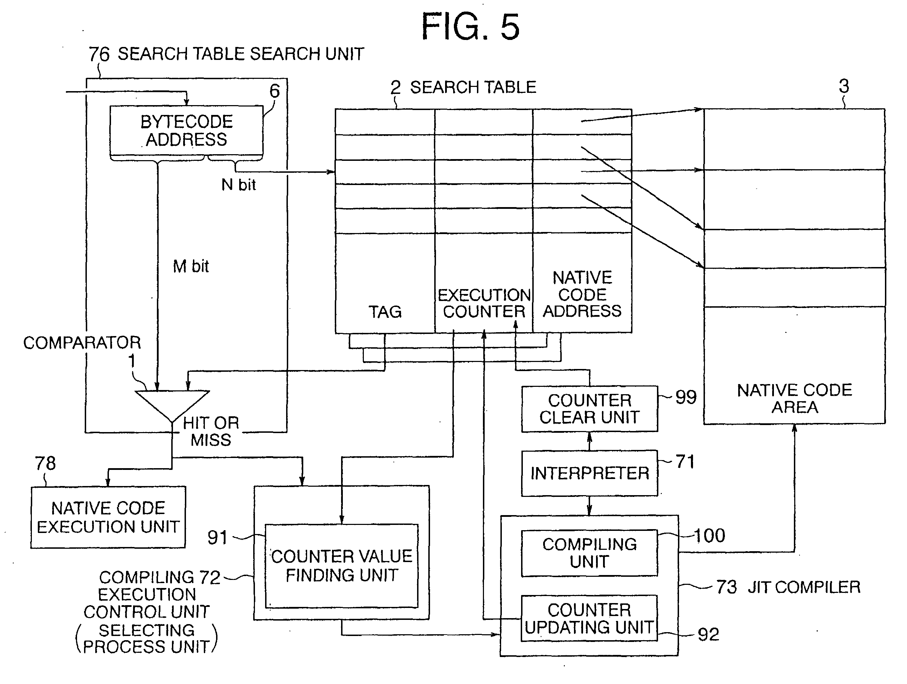

Fig. 5 shows the explanation of the construction and action of the second embodiment of the present invention. In Fig. 5, an interpreter 71, a compiling execution control unit 72, a JIT compiler 73, and a native code control unit 72 are shown. In the compiling execution control unit 72, the counter value finding unit 91 reads the counter value of the search table 2. The JIT compiler 73 comprises a counter updating unit 92 to update the execution counter and a compiling unit 100.

In Fig. 5, the interpreter 71 registers a bytecode address to a tag in the case where the bytecode address is not registered to the tag, and the execution counter is cleared. Further, the interpreter 71 increases the count value of the execution counter in the case where the bytecode address is registered in the tag and the bytecode has not been compiled. The counter value finding unit 91 finds the counter value and, in the case where the counter value is less than the predetermined value, the interpreter executes the instruction of the bytecode. When the counter value finding unit 91 finds that the number of occurences of the bytecode has reached the predetermined value, the JIT compiler 73 compiles the bytecode to the native code by the compiling direction of the compile execution control unit 72. The native code is stored in the native code area 3. The native code address is registered in the tag corresponding to the instruction. After the native code address is registered in the search table 2, the instruction of byte code is executed with the native code in the native code area by the search hit of the search table search unit 76.

As shown in Fig.5, the search table 2 is composed of the tag, the execution counter and the information corresponding to the native code address. Thus, the address of the native code area 3 in the code cache can be found by searching the native code address. Further, the native code address can be found by searching the search table 2 for a tag of lower N bit of the lower address of the bytecode, which is composed of upper Mbit and lower N bit. The upper M bit of the bytecode and the tag information of the search table are input to the comparator 1, and the comparator 1 determines whether a match, or "hit" exists between the tag information and the upper M bit. When there is a hit, the native code execution unit 78 executes the native code.

When the comparison result is a match or hit, a match signal is output from the comparator 1, and the match signal can be used to determine whether the bytecode has been compiled. The compiling execution control unit 72 refers the execution counter value in the case of the search resulting in a miss. When the counter value corresponding to the bytecode is less than the predetermined value, the native code execution control unit directs the interpreter 71 to process the bytecode. The interpreter process is the same as that of the prior art. Alternatively, when the counter value is equal to or greater than the predetermined value, the native code execution control unit 72 directs the JIT compiler to compile the bytecode. In the above, the execution counter is composed on the tag, but the execution counter can also be composed in the cache code 3, that is native code area.

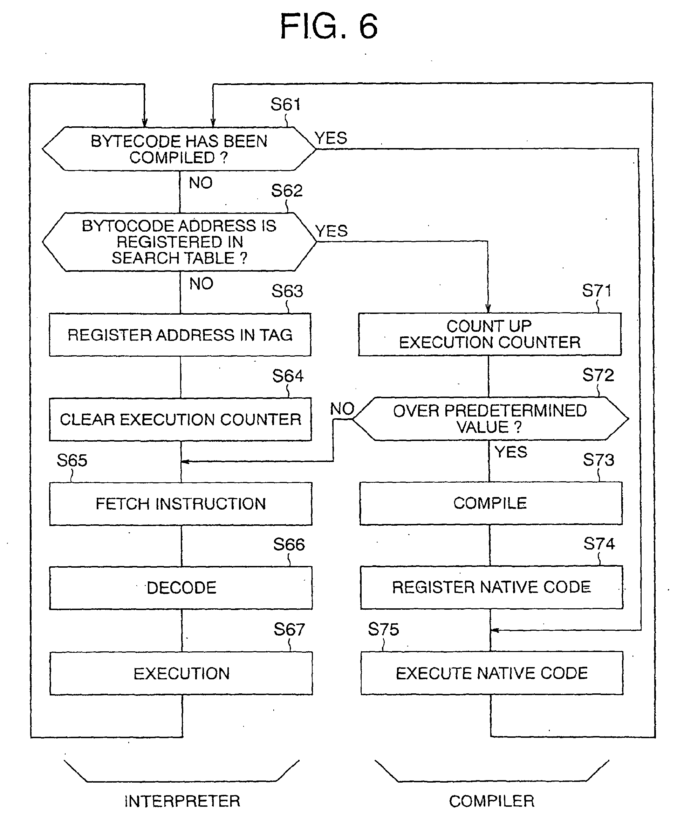

Fig. 6 shows a flowchart of the virtual computer of the second embodiment of the present invention. The flowchart shows the compile selection process. Referring to Fig. 6, the compile selection process of the second embodiment of the present invention will be explained.

The process is composed of two parts. The first part is the process of interpreting (S61-S67), and the second is the process of compiling (S71-S75). In the process of interpreting, it is determined whether the bytecode has been compiled(S 61). When the bytecode has not been compiled, it is determined whether or not the bytecode address registered in the search table, by checking whether the bytecode address is registered or not in the tag of the search table in Fig. 4 (S62). When the address is not registered in the table, the address is registered in the tag (S63). The execution counter is then cleared (S64). Further, the instruction is fetched (S65), decoded (S66), and executed (S67). The process then returns to step S61.

When the result of step S62 determines that the tag is registered in the search table, the execution counter of the search table 2 is increased by +1, for example (S71), and it is determined whether or not the count value is greater than the predetermined value (S72). When the count value is less than the predetermined value, the process goes to the process of step S65 and the instruction is decoded and executed by the interpreter. When the value is equal to or greater than the predetermined value, the process goes to the process of step S73, and the bytecode is compiled by the JIT compiler to generate the native code, and the native code is registered in the code cache 3. In this process, the necessary information, that is the native code address, is registered in table 2 (S74). The native code is executed (S75) and the process then returns to the process of step S61.

In the process of step S61, when the compiling has been implemented, the process returns to the process of S75 and the native code is executed.

The second embodiment of the present invention is characterized in the following features. The compiling process is generally lengthy. The entire processing time of the interpreter execution for bytecodes which are not frequently used is less than the processing time of the execution by compiling them. In the second embodiment of the present invention, however, because the native code which is rarely used is not compiled, the process speed is increased significantly.

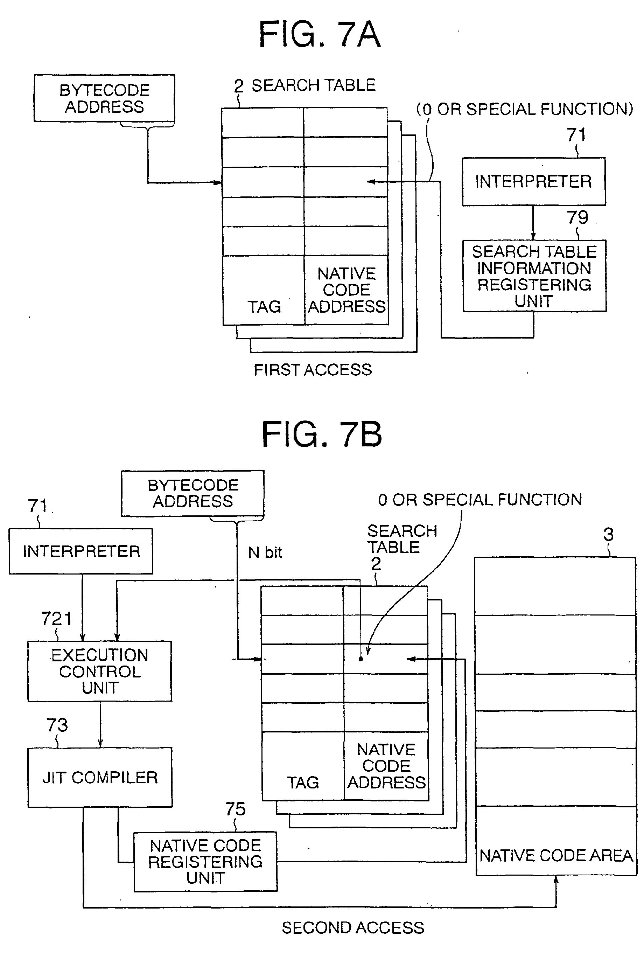

Figs. 7A and 7B are block diagrams of the third embodiment of the present invention. Fig. 7A shows the first access to the search table. Fig. 7B shows the second access to the search table.

### Explanation of the Third Embodiment

The third embodiment of the present invention decides whether compiling is necessary without using the execution counter in the second embodiment. At the time of first execution, only the bytecode address is registered, that is, registered in the tag of the search table 2. In the native code address area, a special function for compiling, that is the top address of the compiling or processing, is registered. Instead of the special function, numerical 0 can be used to register in the native code address registering area. In this way, for example, the first time process is implemented by the interpreter, and the second time process, the process is implemented by the compiler.

Fig. 7-A shows the first time access. In Fig.7-A, reference numeral 71 denotes an interpreter, and the search table information registering unit 79 registers the native code address in the native code area of the search table 2 by the interpreter processing. In Fig. 7A, at the first time access, as the bytecode address is not registered in the search table 2, the interpreter 71 registers the bytecode in the search table 2, and writes numeric 0 or the special function of compiling into the native code address area of the search table 2. Moreover, the bytecode is executed by the interpreter 71.

Fig. 7B shows a block diagram to explain the action of the second time access. In Fig. 7B, an interpreter 71, an execution control unit 721, a JIT compiler 73, a search table 2 and a native code registering unit 75 are shown. In Fig. 7B, the interpreter 71 process at the first access, and the execution control unit 721 direct the JIT compiler, which compiles the bytecode to the native code that the virtual computer can execute when subsequently accessed. The second time the process of the bytecode occurs, numeric 0 or the special function is registered in the native code address area of the search table 2. The execution control unit 721 finds the registered numeric 0 or the special function, and directs the JIT compiler 73 to compile the bytecode. The native code generated by the compiling is stored in the native code area 3, and the native code is then executed. Further, the native code registering unit 75 registers the native code address in the search table 2. After this, when the bytecode process occurs, the search result is always "hit," and the native code can be executed.

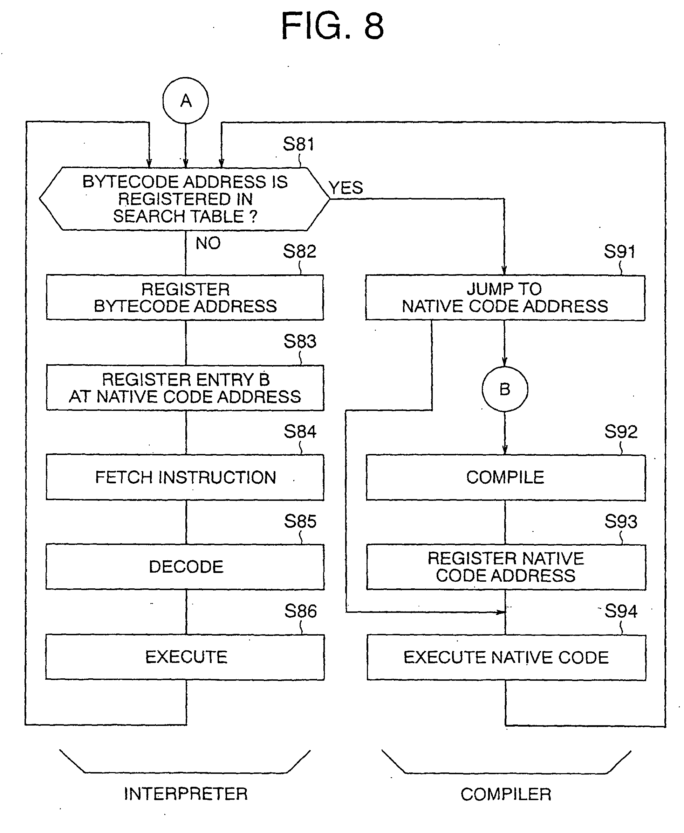

Fig. 8 shows a flowchart of the compiling selection of the third embodiment of the present invention. The processes are composed of the interpreter process of S81-S86 and the compiling process of S01-S04. The interpreter process starts from the circled reference character A, and it is determined whether or not the bytecode address is registered in the search table 2 (S81). When the bytecode address is not registered, that means that it is the first access, and the interpreter interprets the bytecode. In this process, only the bytecode address is registered (S82) in the tag of the search table 2.

Subsequent to the process of the step S82, entry B is registered in the native code address (S83). Further, the instruction is fetched (S84) and decoded (S85). The decoded instruction is then executed (S86) and the process returns to step S81.

At the process of step S81, when the bytecode address is registered, that means that it is the second access, thus the process is implemented by JIT compiler. In the process, the process jumps to a native code address (S91), and the JIT compiler compiles from the entry B (S92), and the native code address is registered (S93). Further, the native code is executed (S94) and the process returns to the process of step S81.

Alternatively, according to the result of the process of step S91, the process goes to the process of step 94 to execute the native code (S94) and returns to S81.

The third embodiment of the present invention is characterized in the following features. Because the compiling process requires long period of time, when processing any bytecode used only one time, the process executed by the interpreter is quicker than if executed by compiling. Thus, the total running speed of a program is increased by the aforementioned processing. Moreover, the third embodiment does not require an area for the execution counter, so memory required in the third embodiment is less than in the second embodiment.

### Explanation of the Fourth Embodiment

In the fourth embodiment the search table does not involve the native code address, but rather involves the information of the compiling being implemented, that is tag information. The native code address in the native code area can be obtained by the calculation of the bytecode address.

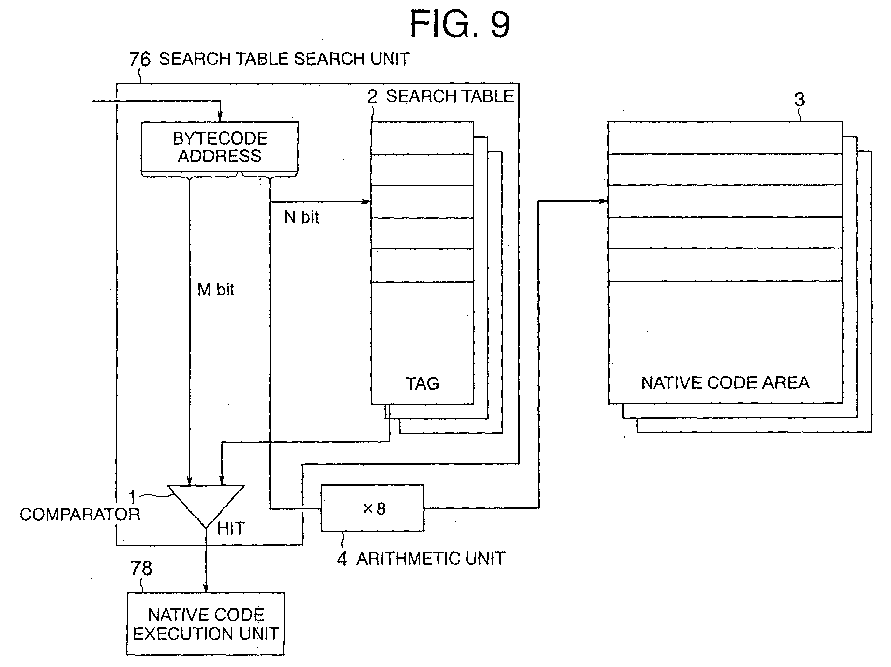

Fig. 9 shows the construction of the search table 2 and the native code area of the fourth embodiment. The search table 2 stores only the tag. The search table 2 is accessed by using lower N bit of the bytecode address. The native code address in the native code area 3 is set with the calculation result of the lower N bit with the arithmetic unit 4. For example, the arithmetic unit 4 calculates the lower N bit of the bytecode times 8 ,that is N × 8, and the calculation result is set to the native code address of the native code area 3.

The tag in the search table 2 can be searched by using lower N bit of the bytecode address composed of upper address of M bit and lower address of N bit. The upper M bit of the bytecode address and the tag information in the search table are input into the comparator 1. Both inputs are compared to decide whether there is a hit or miss. In the case of match, a match signal is output from the comparator 1, and the compiling implementation can be found by the match signal. The address can be decided by the calculation result of the arithmetic unit 4 that calculates the address based on the lower N bit of the byte code.

The fourth embodiment is characterized in the following features. The address of the compiled native code on the memory can be obtained uniquely based on the calculation of bytecode address. Thus, retrieving the native code address in the search table 2 is unnecessary. Further, when substituting the native codes in the native code area, which will be explained later, seeking native codes to be cancelled is unnecessary. Thus, the substitution process is simplified.

### Explanation of the Fifth Embodiment

The fifth embodiment limits the compiling range in the first embodiment to shorten the compiling time, that is, to improve the response performance. When specific instruction, such as a branch instruction or a calling method etc., which are defined in advance, are found in the compiling process, an instruction to stop the compiling, such as a branch instruction or interrupt instruction of the native code, is generated. That is, if a branch instruction or interrupt instruction is inserted at the end of the native code, the rest of the bytecode is not compiled.

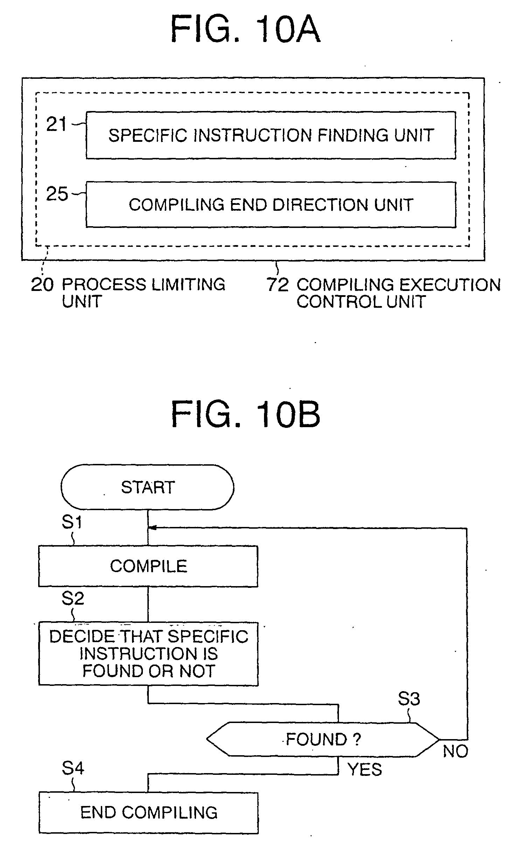

Fig. 10A shows the compiling execution control unit 72 in the virtual computer of the fifth embodiment. The search table in the fifth embodiment is the same as in the first embodiment, shown in Fig. 4. A process limiting unit 20 finds the specific instruction and breaks to compile at the point where the specific instruction is found. Further, the specific instruction finding unit 21 finds the instruction such as THEN processing in an IF condition sentence, or a RETURN instruction. A compiling end direction unit 25 directs to end the compiling.

Fig. 10B shows a flowchart of compiling by the compiling execution control unit 72 of the fifth embodiment and the JIT compiler. The compiling is executed at the step S1. Then it is decided whether or not a specific instruction exists (S2, S3). When the specific instruction is not found, the compiling continues at step S1. Alternatively, when the specific instruction is found at the step S3, the compiling is ended at the step S4. As mentioned above, the process limiting unit 20 limits the compiling range to shorten the compiling time in the virtual computer. When finding the specific instruction in the compiling process, an instruction to interrupt the process is generated so as not to compile the rest of the bytecode from the specific instruction.

The fifth embodiment is characterized by the following features. Only portions of bytecode that need to be compiled are compiled, so the compiling performance is high. For example, when compiling a string of bytecodes of the "IF condition and THEN processing", only the process of the condition "IF" is compiled, and the process of "THEN" is not compiled.

In the prior art, because the whole method is compiled, parts of the process that were never executed were also compiled. On the other hand, in the fifth embodiment of the present invention, only parts inevitably executed are compiled, thus the time wasted on compiling is less and the process can run with high speed. Further, the memory is not wasted, and response efficiency is improved also. In general an application program is interrupted during compiling. In the present invention, however, interrupted time of the application program occurred by the compiling is reduced, because inevitably necessary portions for execution are only compiled by the present invention.

### Explanation of the Sixth Embodiment

The sixth embodiment reduces the compiling time. The sixth embodiment breaks the compiling by the volume of compiled bytecode rather than finding the specific instruction in the fifth embodiment. For example, when one hundred instructions are compiled, the compiling is broken. The sixth embodiment also comprises the same function as the fifth embodiment to interrupt the process at the step of the specific instruction.

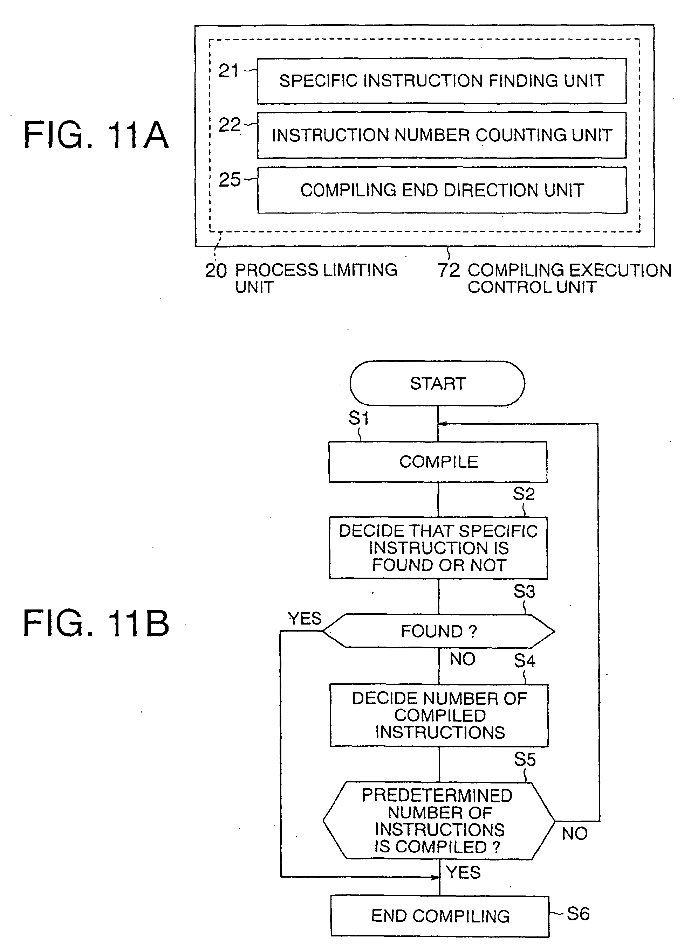

Fig. 11A shows the structure of the compiling execution control unit of the virtual computer of the sixth embodiment. As shown in Fig. 11A, the compiling execution control unit 72 comprises a process limiting unit 20 composed of a specific instruction finding unit 21, an instruction number counting unit 22 that counts the number of compiled instructions, and a compiling end directing unit 25. In Fig. 11A, the instruction number counting unit 22 counts the number of the compiled instructions. The compiling end direction unit 25 directs to end the compiling at the time that the count of instruction number reaches to the predetermined number. The compiling is ended at the time of finding the specific instruction, however, even if the instruction count number does not reach to the predetermined number,

Fig. 11B shows a flowchart of compiling by the instruction counting number unit 22 and the JIT compiler of the sixth embodiment of the present invention. In the process (S1) of the flowchart, whether the specific instruction to end the compiling process is found or not found is decided (S2, S3). When the specific instruction is found, the compiling process is ended (S6). When the specific instruction is not found, the number of compiled instructions is determined (S4, S5). When the number is less than the predetermined number, the process returns to S1 to continue the compiling, and when the number reaches to the predetermined number, the compiling is ended (S6).

The sixth embodiment of the present invention is characterized in the following features. Generated codes are not wasted, and the consumption of memories decreases, because only inevitably executed portions of code are compiled. The response performance of an application is thus improved. In general, an application program is interrupted during compiling. In the present invention, however, only the inevitably executed portions are compiled, thus the breaking time caused by the compiling is reduced. In addition, waste of memory consumption decreases, because the compiling is limited by the condition of the number of compiled instructions.

### Explanation of the Seventh Embodiment

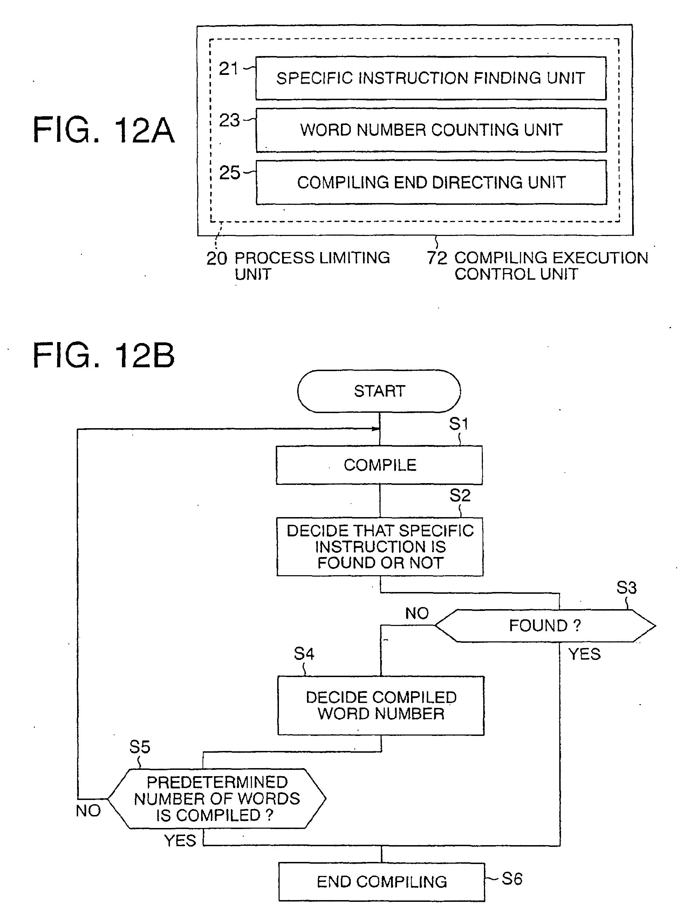

Fig. 12A shows the compiling execution control unit of the virtual computer of the seventh embodiment of the present invention. The seventh embodiment shortens the compiling time. The sixth embodiment breaks the compiling by a condition of the quantity of generated native codes, in addition to a condition of the finding specific instruction in the fifth embodiment. For example, when 128 native codes are generated, the compiling is interrupted. The seventh embodiment, however, comprises the condition of interruption of the compiling in time of finding the specific instruction, which is the same condition as in the fifth embodiment of the present invention.

In Fig. 12A, the compiling execution control unit 72 comprises a process limiting unit 20. The process limiting unit 20 is composed of a specific instruction finding unit 21, a word number counting unit 23 that counts word number compiled (the number of compiled machine words), and the compiling end directing unit 25. In the configuration of Fig. 12A, the word number counting unit 23 counts the number of the words. The compiling end direction unit 25 directs to interrupt the compiling when the compiled word number reaches to a predetermined value. When one of the specific instructions is found, however, the compiling is interrupted even if the compiled word number is less than the predetermined volume.

Fig. 12B shows a flowchart of the compiling execution control unit and JIT compiler of the seventh embodiment of the present invention. In the compiling process (S1), it is determined whether or not the specific instruction for interrupting the process is found (S2, S3). When the specific instruction is found, the process is ended (S6). When the specific instruction is not found (S2, S3), the compiled word number is checked (S4, S5). When the number is less than the predetermined number, the compiling continues at step S1. Alternatively, when compiled word number reaches to the predetermined, the process is ended (S6).

The seventh embodiment of the present invention is characterized in features as follows. Generated native codes are not wasted, and consumption of memory decreases, because only inevitably executed portions are compiled. The response performance of application programs is thus improved. In general, application programs are interrupted during the compiling. In the present invention, however, only inevitably executed portions are compiled, thus the interruption time of the program caused by the compiling is decreased. Further, the response performance of application programs is improved. In addition, the waste of memory consumption is surely suppressed, because the compiling is also limited by the condition of the compiled word number.

### Explanation of the Eighth Embodiment

The eighth embodiment reduces compiling time. The compiling is interrupted by the condition of the elapsed time of compiling, in addition to the condition of finding the specific instruction. For example, when the compiler has compiled for 100 ms, the compiling is interrupted. The eighth embodiment of the present invention comprises also the condition to interrupt compiling in time of finding the specific instruction.

Fig. 13A shows a compiling execution control unit of the virtual computer of the eighth embodiment of the present invention. The compiling execution control unit 72 comprises a process limiting unit 20, a compiling time count unit 24 that counts the. elapsed time from starting compiling, and the compiling end directing unit 25. In Fig. 13A, the compiling time count unit 24 counts the elapsed time of compiling process. The compiling end direction unit 25 directs to interrupt the compiling, when the elapsed time reaches the predetermined time. The compiling is interrupted, however, when the specific instruction is found, even if the compiling time is less than the predetermined time.

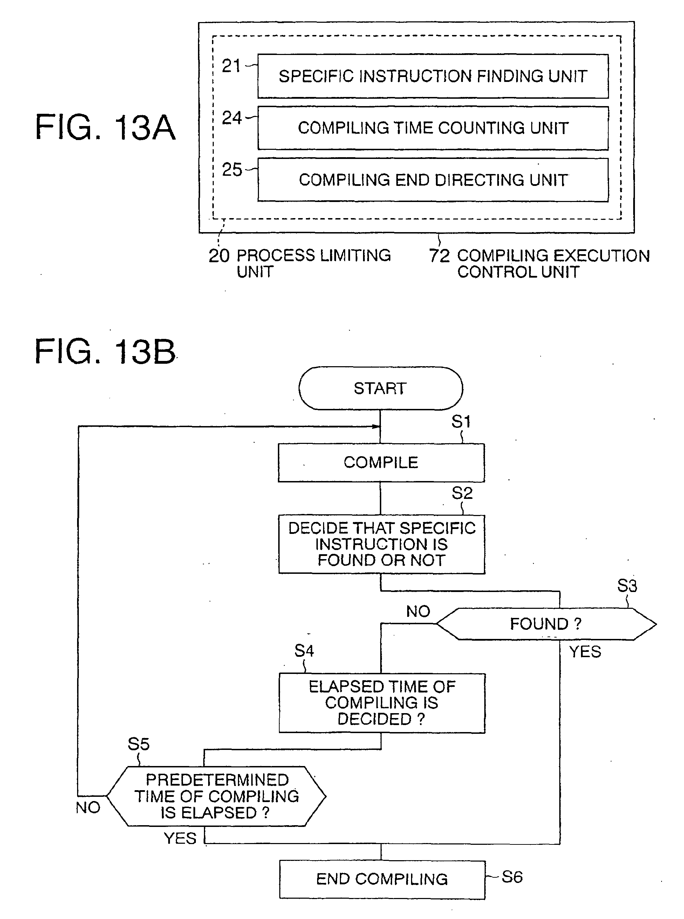

Fig. 13B shows a flowchart of the compiling execution control unit and the JIT compiler of the eighth embodiment of the present invention. In the compiling process (S1), whether the specific instruction found or not found is decided (S2 ,S3). If the specific instruction is found (S2, S4), compiling is ended (S3, S6). If the specific instruction is not found (S3), the elapsed time of the compiling is checked (S4. S5). When the elapsed time of compiling time is less than the predetermined time, the process continues in step S1. When the elapsed time of the compiling reaches to the predetermined time, the process is ended (S6).

The eighth embodiment of the present invention is characterized in features as follows. Generated native codes are not wasted and consumption of memory decreases, because only inevitably executed portions are compiled. The response performance of application programs is improved. In general, application programs are interrupted during the compiling. In the present invention, however, only inevitably executed portion are compiled, thus the interrupting time of application programs caused by compiling is decreased. In addition, waste of memory consumption is decreased, because the compiling is limited also by the condition of the elapsed time of the compiling.

### Explanation of the Ninth Embodiment

The ninth embodiment is substitutes native codes in the code cache. When free space is not found in the cache, that is native code area 3, some native codes in the code cache are cancelled in order from the top of the cache. Another method of substitution is realized by FIFO (first in first out) which cancels in turn from the oldest compiled code that is compiled in oldest time.

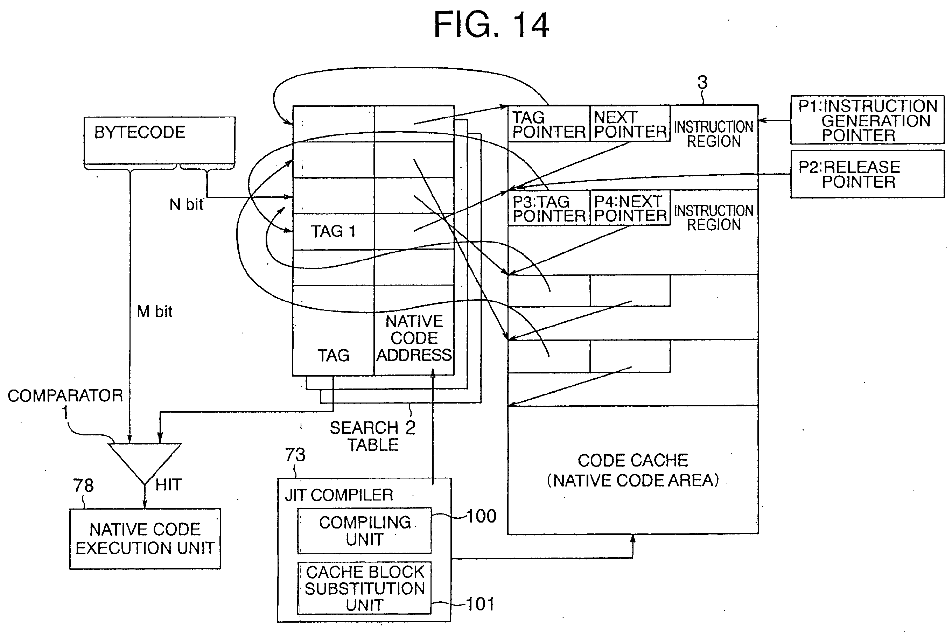

Fig. 14 illustrates an explanation of the search action of the ninth embodiment of the virtual machine of the present invention. In Fig. 14, a comparator 1, a search table 2, a native code area 3, and a JIT compiler 73 are shown. The JIT compiler 73 is composed of a compiling unit 100 and a cache block substitution unit 101.

In the ninth embodiment, P1 is an instruction generation pointer, and P2 is a release pointer. The initial value of P1 points to the leading address of the code cache and the initial value of P2 points to the end address of the code cache. As the process proceeds with many compilings, the code cache is divided into blocks each time compiling is executed. A tag pointer that is the leading address of the block, and a next pointer that points the next block are generated and stored. The rest of the block area is instruction region to store the native code. The next pointer is not required to be the pointer, but any thing showing the border of the block could be used instead of the pointer.

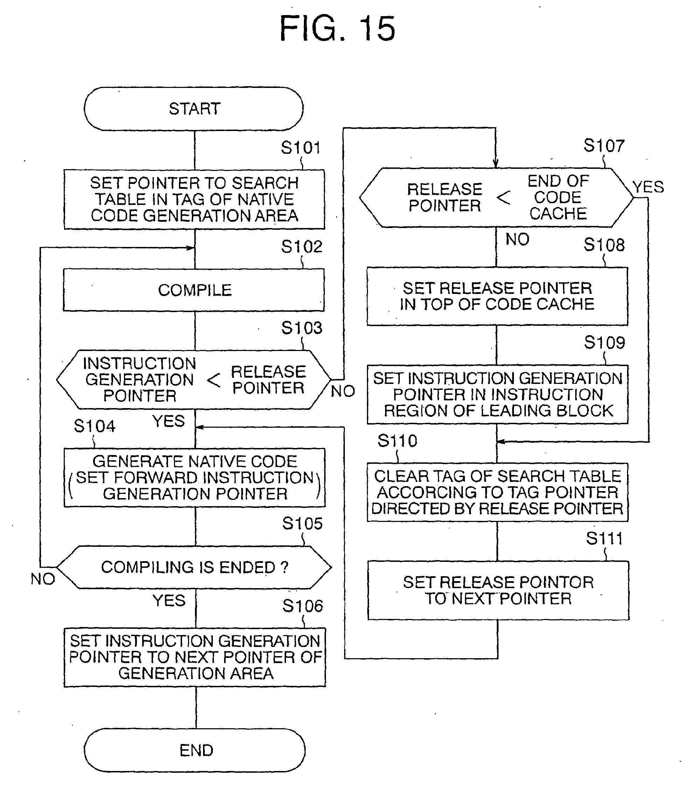

Fig.15 shows the flow chart of the code cache substitution of the ninth embodiment of the present invention..

This process shows an example that executes the substitution in the code cache 3 during compiling. A tag pointer to the search table 2 is set in a tag pointer in the native code generation area (S101). The tag pointer setting area is directed by the P1 (instruction generating pointer) shown in Fig. 14. The steps S102, S 103, S104 and S105 are a main group of the compiling process that produce the native code from the bytecode.

The JIT compiler transforms the bytecode to the native code (S102). Before storing the native code in the code cache 3, the value of the instruction generating pointer and the value of the releasing pointer are compared to each other, to determine whether or not the instruction generating pointer is less than the releasing pointer. This check prevents overwriting a valid native code.

When the instruction generating pointer is less than the release pointer, that is, that all the area is free space, the native code is generated and written in the cache code 3 (S104). Further, the instruction generating pointer is increased and it is determined whether or not the compiling ending condition is satisfied (S105). As a result, when compiling ending condition is not satisfied, the process returns to step S102 to continue the compiling. When the condition of the compiling ending condition is satisfied, the block of the generated native codes is settled as one block. That is, the instruction generating pointer is set to the next pointer (S106). When the aforementioned condition is not satisfied, that is, the instruction generating pointer is more than or equal to the release pointer, an effective area for storing the generated native code has to be generated. Because of this, twhether or not the release pointer points to the end address of the cache has to be checked. That is, that the release pointer is less than the end address of the cache or not (S107) has to be checked. As a result, when the release pointer points the end address of the code cache, the release pointer is set at the top address of the cache (S 108), and the instruction generating pointer is set in the instruction region of the leading block (see Fig. 14) (S109). With this procedure, the block is released at the top address of the code cache 3.

Further, a tag in the search table 2 is cleared according to the tag pointer pointed by the release pointer (S110). The tag in the search table is canceled by the process of step S110, and the block pointed by the release pointer is really released. Then the set of the release pointer is changed to the next pointer (S111) and goes to the process of step S104. With this process, the release pointer points to the next block.

When the condition that the release pointer is less than the end address of code-cache is satisfied at S107, the tag of search table pointed by the tag pointer of the release pointer is cancelled (S110), and the block pointed by the release pointer is really released. After this, the release pointer is set to the next pointer (S 111), and the process goes to the process of S104. With this process, the release pointer points to the next block.

In the aforementioned flowchart, when using the FIFO system, the code is cancelled in turn from the oldest code, and the release pointer is set to the top of the oldest block at the step of S 108.

The ninth embodiment of the present invention is characterized in features as follows. Because of the code cache comprising the pointer to the search table, the block size of the code cache can be variable in length, and the memory is used effectively. The code cache could be cancelled by investigating the whole search table instead of using the pointers, but investigating the whole table is a big quantity of processing volume and wastes processing time for compiling. The ninth embodiment of the present invention, however, is able to cancel a portion of the code cache, that is native code area, and the cancel of the code cache is executed with high speed.

### Explanation of the Tenth Embodiment

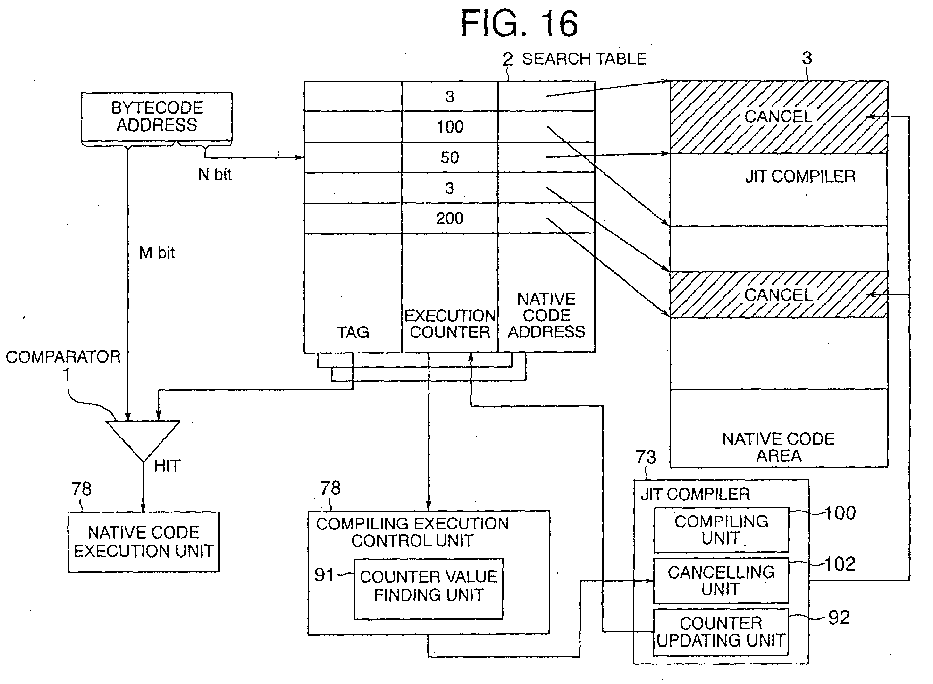

Fig. 16 shows the drawing for explanation of substitution in the code cache of the virtual computer of the tenth embodiment of the present invention. In Fig. 16, a compiling execution control unit 72, a counter value finding unit 91, a JIT compiler 73, a count value updating unit 92, a compiling unit 100, a native code executing unit 78, and a native code canceling unit 102 are shown. The count value updating unit 92 counts the number of the bytecode, that is the instruction, implemented by the interpreter, and counts the number of times the compiled native code has been accessed, and updates the count value of an execution counter.

In the tenth embodiment of the present invention, when there is not free space in the code cache, the counter value finding unit 91 finds the native code with the least execution count value by scanning, and the native code canceling unit 102 cancels the native codes in turn from the native code of the least execution count value. The execution counter is set with any value at the time just starting the compiling. With each execution of the native code, the execution counter corresponding to the executed native code is increased, and when a native code is cancelled, the values of the all counters are decreased.

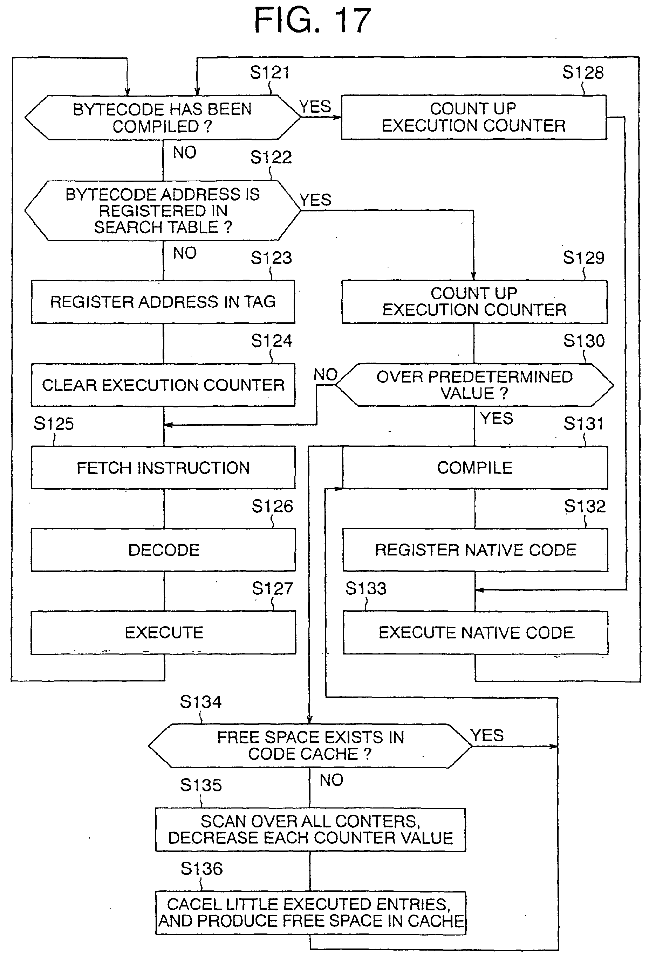

Fig. 17 shows a flow chart of the tenth embodiment of the present invention. The tenth embodiment will be explained with reference to Fig. 17. The steps of S121-S131 are the same as the steps of S61-S67 in Fig. 6.

In the process of the interpreter, it is determined whether or not the bytecode has been compiled (S121). When compiled, the registration or lack of registration of the bytecode in the table is determined, which decides whether the byte code is registered in the tag of the search table 2 or not (S122). As a result, when the byte code is not registered in the tag table, the registration of the address of the bytecode of the byte code is implemented (S123), and the execution counter is cleared (S124). Then, an instruction is fetched and decoded (S125, S126). The instruction is executed as aforementioned (S127), and further the process goes to step S121.

When the decision at step 122 is that the bytecode address has been registered in the table, the execution counter of the search table 2 is increased up (+1) (S129), and it is determined whether the counter value exceeds a predetermined value (S130). As a result, when the value is less than the fixed value, the process goes to step S 125 to be executed by the interpreter. When the number of execution times is more than or equal to the fixed value, the bytecode is compiled by the compiler to generate the native code (S132), and the generated native code is registered in the code cache (S132). At the same time, the execution counter of the search table 2 is set. Then, the native code registered in the process of S 123 is executed (S133), and the process goes to the process of S121. At the process of S121, when the byte code has been compiled is decided, the execution counter of the search table 2 is increased up (+1) (S128), and the process goes to step of S 133.

In the process of the step S131, when a native code is generated, the existence of free space in the code cache 3 is determined (S134). When free space exists in the code cache 3, the process returns to step S131. When free space does not exist in the code cache 3, all execution counter in the table is scanned, and all execution counters are decreased (S135). Then, the entries of small numbers of execution times are cancelled to make free space in the code cache 3 (S136). The process then returns to step 131.

The tenth embodiment of the present invention is characterized in the features as follow. Native codes that are executed frequently are hardly canceled. The free spaces, however, are scattered in the code cache area, and branch instruction to the scattered codes, which is not necessary essentially, are needed.

### Explanation of the Eleventh Embodiment

The eleventh embodiment is an example that closes the native codes in the code cache that the free spaces are scattered in the native codes. In the tenth embodiment, free spaces scattered in the code cache 3 were inevitably caused. The scattered blocks of the native codes, which are generated in one compiling process, are moved or relocated so as to be close each other in the location of the native codes.

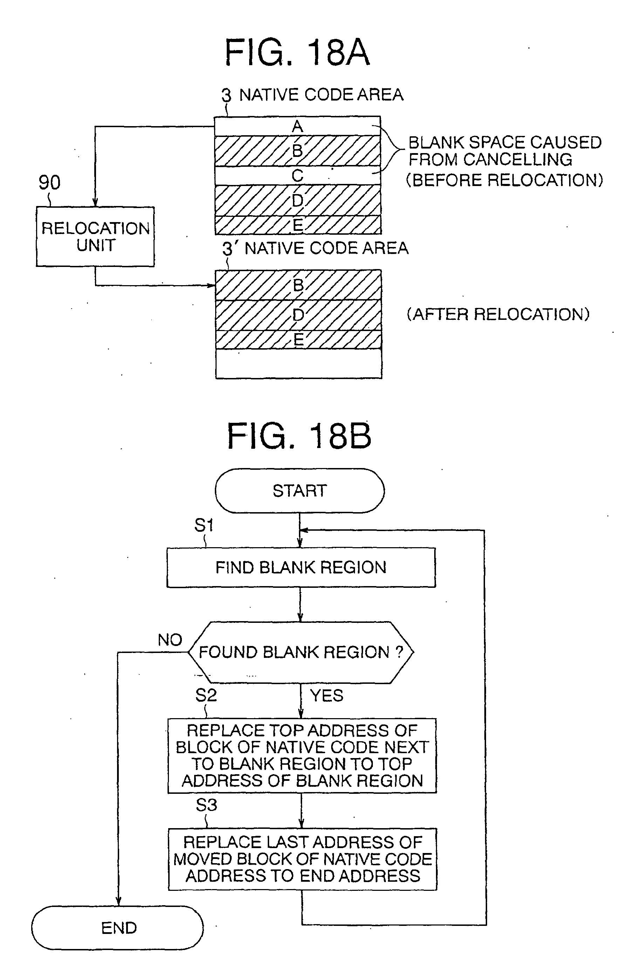

Fig. 18A is the drawing for explaining the action of the eleventh embodiment of the virtual computer of the present invention. In Fig. 18A, a native code area 3 before the relocation of the native code block, and the native code area 3' after the relocation and a relocation unit 90 are shown. The relocation unit 90 finds the space area A and C, and closes the block of the native code block. Fig. 18B shows a flowchart of the relocation of the native codes. When the relocation unit 90 finds the space area between the native code blocks (S1), the top address of the space area is replaced to the top address of a native code block next to the free space (S2). Further, the end address of the moved block of native codes is relocated to the end address of the moved block of the native codes. (S3).

The eleventh embodiment of the present invention is characterized in features as follow. Insertion of the branch instruction to connect a divided instruction caused by the scattered space area is not needed. In the eleventh embodiment of the present invention, the instruction queue to be executed is located closely in the code cache, and is always arranged to be one block, because of this, the code cache is used effectively and the performance is improved.

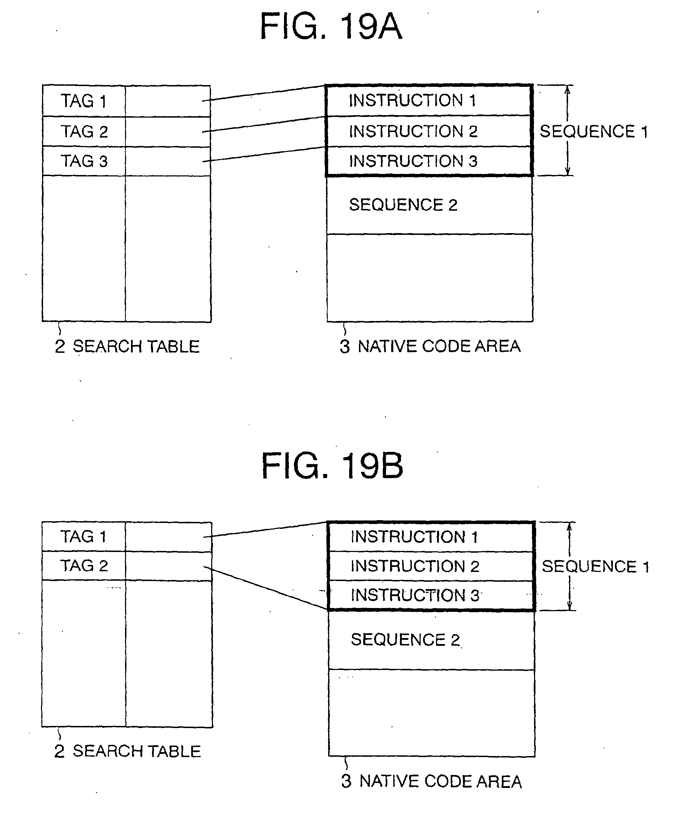

Figs. 19A and 19B show the drawing of an explanation to improve the hit rate. The tag of the search table of the present invention can be applied to both cases. One case is that generates the tag for each instruction in the native code area. The other case is that generates the tag for one compiling sequence. Fig. 19A shows the case that generates the tag for each instruction. Fig. 19B shows the case that generates the tag for one compiling sequence.

In the case that the addresses of all compiled bytecodes are registered in the search table as shown in Fig. 19A, overwriting on the search table 2 would increase, because of the limitation of the entry number of the search table. From this, canceling of compiled native codes on the search table increase. It causes an increase in missing, and makes the compiling a waste. But the case that generates the tag for one compiling sequence shown in Fig. 19B prevents bad performance.

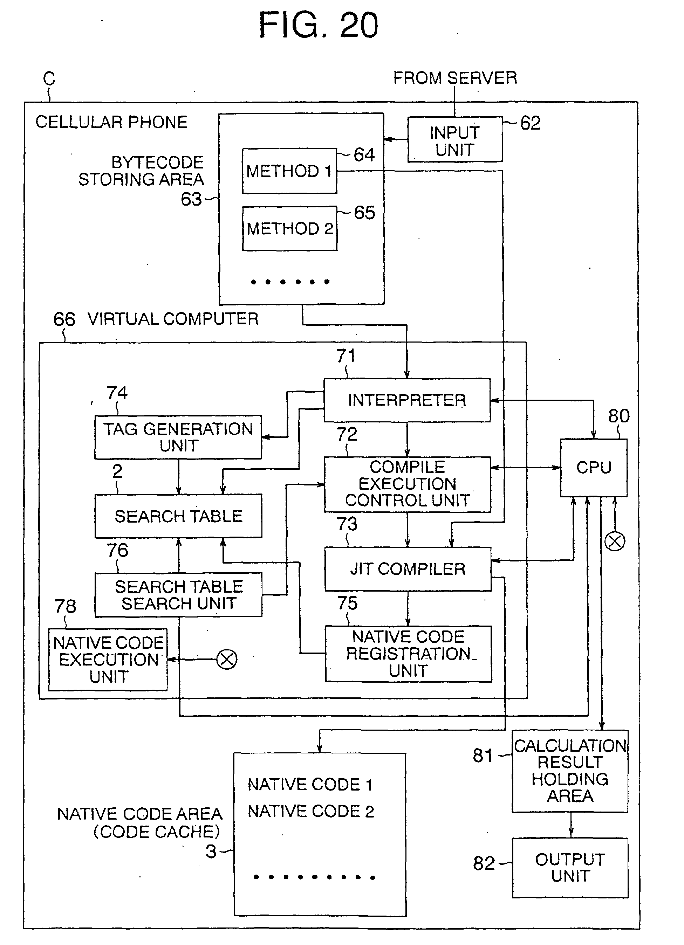

Fig. 20 shows a cellular phone comprising the virtual computer of the present invention. The virtual computer of the present invention can be applied to a portable wireless communication device that memory size is small. Fig. 20 shows an example of application for a cellar phone. In Fig. 20, the construction that does not relate to the present invention is not shown.

In the cellar phone 61 shown in Fig. 20, an input unit 62 inputs bytecodes sent from sever 51. A bytecode storing area 63 in memory holds the input bytecodes. Methods 64 and 65 are compiled to bytecodes. The virtual computer 66, an interpreter 71, a compile execution control unit 72, a JIT compiler 73, CPU 80, and a native code executing unit 78 are shown. A native code area 3 is a memory region storing native codes: An output 82 outputs the calculated result. A tag generation unit 74 generates tags in the search table 2. A search table search unit 76 searches the search table, decides whether the bytecodes have been compiled and stored in the native code area or not.

Because the action of the virtual computer in Fig. 20 is the same as the action of the virtual computer in Fig. 2, the detail explanation of the action is omitted.

### POSSIBILITY FOR APPLICATION TO INDUSTRY

The present invention comprises the search table involving information to decide whether or not bytecodes have been compiled from byte code addresses, and to search the addresses of the compiled native code. Thus, that the bytecode has been compiled or not can be easily decided from the search table, and the stored addresses of the compiled native codes are easily found by searching the search table. As a result, the execution speed of programs is increased by compiling the byte code to the native code. Comparing the memory size used by the prior art JIT compiler, the memory size for generating and storing the native code is significantly reduced. Thus, the processing speed is increased with small memory size in the present invention.

Because of these features, the virtual computer of the present invention can be applied to a cellular phone, PDA,etc., that are portable wireless communication devices of small memory size, and makes their running speed high.

## Claims

1. A virtual computer realized in memory comprising:
a bytecode storing area;
a unit to execute bytecodes by interpreting the bytecodes in order;
a compiler to compile bytecodes to native codes that the virtual computer executes; and
a native code area comprising:
a search table storing tag information generated from addresses of the bytecodes and addresses of compiled native codes in the native code area.

2. The virtual computer of claim 1, further comprising:
an execution counter formed in the search table or in the native code area to count instruction executing times; and
a compiling execution control unit, wherein
the compiling execution control unit checks a value of the execution counter in the process of executing the bytecode, and when the value is less than a previously fixed value, the interpreter executes bytecodes by interpreting bytecodes in turn to execute the bytecode and
when the value is equal to or more than the fixed value, the compiler compiles the bytecodes,and the execution is implemented.

3. The virtual computer of claim 1, further comprising:
a registering unit registering bytecode addresses and native code addresses in the search table; and
the compiling execution control unit,wherein
at the first time of the execution, the registering unit registers only the native code address in the search table and special values or 0 for the native code address and
at the times of subsequent executions, the compiling execution control unit controls the JIT compiler to compile the bytecode to the native code that the virtual computer can execute.

4. The virtual computer of claim 1, further comprising:
a compiling execution control unit to limit compiling range to shorten the compiling time, wherein the compiling execution control unit generates an instruction to interrupt compile and not to compile the rest of the process, when finding a specific instruction that is predetermined.

5. The virtual computer of any of claims 1 to 4, further comprising:
a first discarding unit to discard native codes in order from a top address of the native code area, when free space does not exist in the native code area.

6. The virtual computer of any of claims 1 to 5, further comprising:
a second discarding unit to discard an oldest native code by FIFO system, when free space does not exist in the native code area.

7. The virtual computer of any of claims 1 to 6, further comprising:
an arithmetic unit to calculate the native code address from the bytecode address, wherein the search table involves only information to decide whether the bytecode is compiled or not, and the native code address is calculated by the arithmetic unit calculation based on the bytecode address.

8. The virtual computer of claim 4,
wherein the compiling execution control unit controls the interruption of compiling when both a predetermined number of compiled bytecodes and aspecific instruction are found.

9. The virtual computer of claim 4, wherein the compiling execution control unit controls the interruption of compiling when both a predetermined number of generated native codes and a specific instruction are found.

10. The virtual computer of claim 4, wherein the compiling execution control controls the interruption of compiling when both a predetermined compiling time elapses and and aspecific instruction is found.

11. An operating method of virtual computer realized in memory, comprising:
a bytecode storing area;
a unit to execute bytecodes by interpreting the bytecodes in order;
a compiler to compile bytecodes to native codes that the virtual computer executes; and
a native code area comprising:
storing tag information generated from an address of the bytecode and addresses of native codes in the native code area in a search table; and
deciding whether or not compiling the byte code is necessary by searching the search table.

12. The operating method of the virtual computer of claim 11, further comprising:
an execution counter formed in the search table or in the native code area to count instruction executing times,
wherein, a value of the execution counter is checked in the process of executing the bytecode, and when the value is less than a previously fixed value, bytecodes are executed by the interpreter, and
when the value is equal to or more than the fixed value, the compiler compiles the bytecode and the execution is implemented.

13. The operating method of the virtual computer of claim 11 or 12,
wherein the compiling range is limited to shorten the compiling time by interrupting the compiling and not compiling the rest of the process when a predetermined specific instruction is found.

14. The operating method of the virtual computer of claim 11, 12 or 13, wherein
native codes are discarded in order from a top address of the native code area, when free space does not exist in the native code area.

15. The operating method of the virtual computer of claim 11, 12, 13 or 14 wherein an oldest native code is discarded in order by FIFO system, when free space does not exist in the native code area.

16. The operating method of the virtual computer of claim 11,
wherein the search table involving only information to determine whether or not bytecodes are compiled, and native code addresses are calculated by the arithmetic unit calculation based on the bytecode address.

17. The operating method of the virtual computer of claim 13,
wherein the compiling is interrupted when a predetermined number of compiled bytecodes are found and the specific instruction is found.

18. The operating method of the virtual computer of claim 13,
wherein the compiling is interrupted when a predetermined number of generated native codes is found and the specific instruction is found.

19. The operating method of the virtual computer of claim 13,
wherein the compiling is interrupted when a predetermined compiling time has elapsed and the specific instruction is found.

20. A terminal apparatus, comprising:
a virtual computer realized in memory comprising a bytecode storing area;
a unit to execute bytecodes by interpreting the bytecodes in order;
a compiler to compile bytecodes to native codes that the virtual computer executes; and
a native code area comprising:
a search table storing tag information generated from an address of the bytecode and addresses of the native codes in the native code area.

21. The terminal apparatus of claim 20, wherein the terminal device is a portable terminal device.

22. The terminal apparatus of claim 20 or 21, wherein the terminal device is a portable wireless terminal device.
